# EUROPÄISCHE PATENTANMELDUNG

(11) **EP 1 772 817 A2**
(43) Veröffentlichungstag der Anmeldung: **11.04.2007**
(21) Anmeldenummer: 06016277.3
(22) Anmeldetag: 04.08.2006
(51) Int. Cl.: G06K 15/12, G06K 15/02

(54) **Verfahren zum Ansteuern eines Beschriftungsgeräts**

(30) Priorität: 05.10.2005 DE 102005047838
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft ein Verfahren zum Ansteuern eines Beschriftungsgeräts, welches einen über einer Beschriftungsebene beweglichen Beschriftungskopf aufweist. Dabei werden einer Datenverarbeitungseinrichtung vorgegebene Schriftzeichen mit definierten zu beschriftenden Bereichen übermittelt, und die Datenverarbeitungseinrichtung berechnet auf die Beschriftungsebene bezogene Koordinaten der Umrisse der Schriftzeichen. Desweiteren berechnet die Datenverarbeitungseinrichtung Mittellinien (10) zu die zu beschriftenden Bereiche beiderseits begrenzenden Linienpaaren der Umrisse, wobei die Mittellinien (10) zu den beiden Linien (12) jedes der Linienpaare im selben Abstand verlaufen. Die Koordinaten der berechneten Mittellinien (10) werden an das Beschriftungsgerät übermittelt, und der Beschriftungskopf wird entlang der Mittellinien (10) bewegt.

## Beschreibung

Die Erfindung betrifft ein Verfahren zum Ansteuern eines Beschriftungsgeräts.

Beschriftungsgeräte wie Laserdrucker, Tintenstrahldrucker, Plotter, Matrixdrucker oder Graviermaschinen bringen Schriftzeichen auf zu beschriftende Flächen entweder in einer Rastergrafik oder in einer Vektorgrafik auf. Bei der Rastergrafik sind die zu beschriftenden Bereiche aus einzelnen Punkten, den sogenannten Pixeln, gebildet. Diese Punkte werden aufgebracht, indem der Beschriftungskopf des Beschriftungsgeräts, beispielsweise bei einem Matrixdrucker, die zu beschriftende Fläche zeilenweise abfährt. Den Gegensatz zur Rastergrafik stellt die Vektorgrafik dar, die aus Linien, Kurven und Flächen aufgebaut ist, die mit Vektoren mathematisch genau beschrieben werden können. Die Vektorgrafik bildet die Grundlage für sogenannte True Type-Schriften, bei denen die Schriftzeichen als Hüllkurven oder Konturen vektoriell dargestellt werden. Beim Aufbringen der Schriftzeichen werden deren Begrenzungslinien auf die zu beschriftende Ebene aufgebracht und mit Farbe ausgefüllt. Bei sehr schnell arbeitenden Laserdruckern ist ein solches Beschriftungsverfahren zwar sehr gut durchzuführen, bei langsamer arbeitenden Beschriftungsgeräten ist es jedoch zu zeitaufwendig.

Es ist daher Aufgabe der Erfindung, ein Verfahren der eingangs genannten Art zu entwickeln, das eine weniger zeitaufwendige vektorielle Arbeitsweise ermöglicht.

Diese Aufgabe wird erfindungsgemäß durch ein Verfahren mit den Merkmalen des Anspruchs 1 gelöst. Vorteilhafte Weiterbildungen sind Gegenstand der abhängigen Ansprüche.

Der Erfindung liegt der Gedanke zugrunde, dass Schriftzeichen in Pixelformat oder True Type-Schriften in rein vektorielle Schriften umgewandelt werden können. Indem der Beschriftungskopf lediglich entlang der Mittellinien bewegt wird, statt Konturen der Schriftzeichen abzufahren und anschließend auszufüllen, ergibt sich eine erhebliche Zeitersparnis. Dies ist insbesondere bei Graviermaschinen vorteilhaft, denen Schriftzeichen in Pixelformat oder in True Type übermittelt werden und die nach einer Berechnung der Mittellinien lediglich letztere in die zu beschriftende Fläche eingravieren müssen.

Zweckmäßig werden zur Berechnung von Mittellinien die Linienpaare nur so weit herangezogen, als ihre beiden Linien einen Winkel einschließen, der einen vorgegebenen Winkel nicht überschreitet. Durch diese Maßnahme kann sichergestellt werden, dass die Mittellinien bei abgerundeten Endbereichen der Schriftzeichen an einem definierten Punkt enden. Desweiteren werden vorteilhaft zur Berechnung von Mittellinien nur Linien herangezogen, deren beiden Linien in einem Abstand verlaufen, der einen vorgegebenen Abstand nicht überschreitet. Viele Schriftzeichen weisen rechteckförmige zu beschriftende Bereiche auf. Durch die genannte Maßnahme kann erreicht werden, dass in solchen Bereichen als Mittellinie lediglich die Längsachse des Rechtsecks, nicht jedoch seine querverlaufende Symmetrieachse berechnet und anschließend mittels des Beschriftungskopfs aufgebracht wird. Dies kann auch dadurch erreicht werden, dass zur Berechnung von Mittellinien von durch zwei quer zueinander verlaufenden Linienpaaren begrenzten zu beschriftenden Bereichen jeweils nur das Linienpaar herangezogen wird, dessen beiden Linien den geringeren Abstand aufweisen.

Vorzugsweise wird jede der Mittellinien bis maximal zu einem Punkt geführt, an dem sie eine einen der Umrisse begrenzende Linie schneidet. Dadurch wird erreicht, dass die Mittellinien, die mittels des Beschriftungskopfs auf die zu beschriftende Fläche aufgebracht werden, nicht über die Umrisse der Schriftzeichen hinausgehen. Desweiteren kann vorgesehen sein, dass mindestens eine der Mittellinien bis zu einem Schnittpunkt mit einer weiteren der Mittellinien fortgeführt wird, wenn der Schnittpunkt im zu beschriftenden Bereich liegt. Dadurch wird verhindert, dass die betreffende Mittellinie über die weitere Mittellinie hinaus fortgeführt wird, und es wird erreicht, dass die Mittellinie an der weiteren Mittellinie endet.

Im Folgenden wird die Erfindung anhand von drei in der Zeichnung dargestellten Ausführungsbeispielen näher erläutert. Es zeigen
- Fig. 1 bis 3: die Umwandlung von drei verschiedenen Schriftzeichen von einem Pixel oder True Type-Format in ein Vektorformat.

In jeder Figur der Zeichnung ist links eine flächige Darstellung eines Schriftzeichens abgebildet, wobei jedes der Zeichen auf die Zeichen- oder Beschriftungsebene bezogene definierte Bereiche aufweist, die beispielsweise durch Ausfüllen mit Farbe beschriftet werden sollen. Bei den Zeichen handelt es sich um zwei verschiedene Arten eines A (Fig. 1, 2) sowie um ein r (Fig. 3).

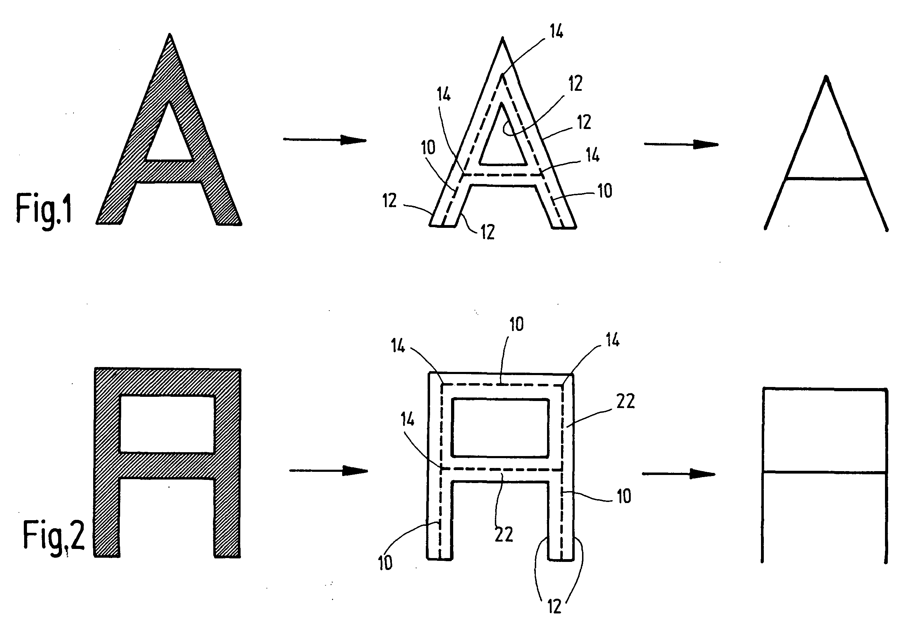

Ein mit dem erfindungsgemäßen Verfahren angesteuertes Beschriftungsgerät weist eine Datenverarbeitungseinrichtung auf, an die die vorgegebenen Schriftzeichen übermittelt werden. Die Datenverarbeitungseinrichtung berechnet auf die Beschriftungsebene (in den Figuren die Zeichenebene) bezogene Koordinaten der Umrisse der Schriftzeichen. Die Umrisse bestehen aus die zu beschriftenden Bereiche beiderseits begrenzenden Linienpaaren, die gerade verlaufen können (Fig. 1, 2) oder gekrümmt. Zu den Linienpaaren berechnet die Datenverarbeitungseinrichtung Mittellinien 10, die zu den beiden Linien 12 des betreffenden Linienpaars im selben Abstand verlaufen, wie in den Figuren jeweils in der Mitte gestrichelt dargestellt. Das bedeutet, dass eine Senkrechte auf der Mittellinie 10 die beiden Linien 12 in Punkten schneidet, die gleich weit von der Mittellinie 10 entfernt sind. Die Koordinaten der berechneten Mittellinien 10 werden an das Beschriftungsgerät zur Ansteuerung des Beschriftungskopfs übermittelt, und der Beschriftungskopf wird entlang der Mittellinien 10 bewegt, so dass ein modifiziertes, aus den Mittellinien 10 bestehendes Schriftzeichen auf die Zeichenebene aufgebracht wird, wie in den Figuren jeweils rechts dargestellt.

Über den in den Figuren links dargestellten zu beschriftenden Bereich werden die Mittellinien 10 nicht hinausgeführt. An den Stellen 14, an denen sich die Mittellinien 10 schneiden, kann zumindest eine der Mittellinien 10 enden, wie in Fig. 1, 2 dargestellt. Dies wird dadurch vorgegeben, dass die Datenverarbeitungseinrichtung erkennt, wenn eine Mittellinie 10 weniger als eine vorgegebene Strecke über den Schnittpunkt 14 mit einer weiteren Mittellinie 10 hinaus fortzuführen wäre. Eine solche Mittellinie wird dann an dem Schnittpunkt 14 abgeschnitten.

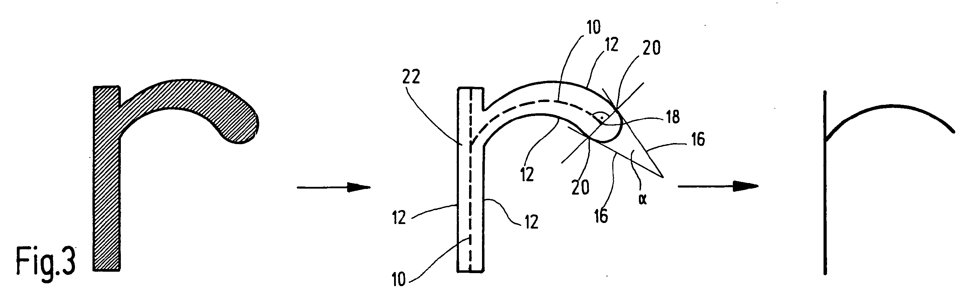

Zur Berechnung der Mittellinien 10 werden die Linienpaare nur so weit herangezogen, als ihre beiden Linien 12 einen Winkel einschließen, der einen vorgegebenen Winkel α nicht überschreitet. Dies ist in Fig. 3 in der mittleren Abbildung veranschaulicht. Das r endet in einer Rundung. Dort laufen die seinen Umriss begrenzenden Linien 12 zusammen, wobei sich der von ihnen bzw. von ihren Tangenten eingeschlossene Winkel allmählich bis auf 180° vergrößert. Die Mittellinie 10 endet an einem Endpunkt 18, der im Abstand zu den den Umriss begrenzenden Linien 12 liegt. Eine Senkrechte auf der Mittellinie 10, die durch diesen Endpunkt 18 verläuft, schneidet die einander gegenüberliegenden Linien 12 an jeweils einem Punkt 20. Legt man an den letztgenannten Punkten 20 Tangenten 16 an die Linien 12, so schließen diese Tangenten 16 zueinander den vorgegebenen Winkel α ein.

Um zu verhindern, dass in einem rechteckförmigen Teilbereich 22 des vorgegebenen Schriftzeichens zwei zueinander senkrechte Mittellinien 10 berechnet und durch den Beschriftungskopf aufgebracht werden, werden zur Berechnung von Mittellinien 10 nur Linienpaare herangezogen, deren beide Linien 12 in einem Abstand verlaufen, der einen vorgegebenen Abstand nicht überschreitet. Die Mittellinie 10 eines rechteckförmigen zu beschriftenden Bereichs 22 ist somit als die Mittellängslinie definiert, nicht als die Mittelquerlinie.

Zusammenfassend ist folgendes festzuhalten: Die Erfindung betrifft ein Verfahren zum Ansteuern eines Beschriftungsgeräts, welches einen über einer Beschriftungsebene beweglichen Beschriftungskopf aufweist. Dabei werden einer Datenverarbeitungseinrichtung vorgegebene Schriftzeichen mit definierten zu beschriftenden Bereichen übermittelt, und die Datenverarbeitungseinrichtung berechnet auf die Beschriftungsebene bezogene Koordinaten der Umrisse der Schriftzeichen. Desweiteren berechnet die Datenverarbeitungseinrichtung Mittellinien 10 zu die zu beschriftenden Bereiche beiderseits begrenzenden Linienpaaren der Umrisse, wobei die Mittellinien 10 zu den beiden Linien 12 jedes der Linienpaare im selben Abstand verlaufen. Die Koordinaten der berechneten Mittellinien 10 werden an das Beschriftungsgerät übermittelt, und der Beschriftungskopf wird entlang der Mittellinien 10 bewegt.

## Patentansprüche

1. Verfahren zum Ansteuern eines Beschriftungsgeräts, welches einen über einer Beschriftungsebene beweglichen Beschriftungskopf aufweist, bei dem einer Datenverarbeitungseinrichtung vorgegebene Schriftzeichen mit definierten zu beschriftenden Bereichen übermittelt werden, bei dem die Datenverarbeitungseinrichtung auf die Beschriftungsebene bezogene Koordinaten der Umrisse der Schriftzeichen berechnet, bei dem die Datenverarbeitungseinrichtung zu die zu beschriftenden Bereiche beiderseits begrenzenden Linienpaaren der Umrisse jeweils Mittellinien (10) berechnet, die zu den beiden Linien (12) jedes der Linienpaare im selben Abstand verlaufen, und bei dem die Koordinaten der berechneten Mittellinien (10) an das Beschriftungsgerät übermittelt werden und der Beschriftungskopf entlang der Mittellinien (10) bewegt wird.

2. Verfahren nach Anspruch 1, **dadurch gekennzeichnet, dass** zur Berechnung von Mittellinien (10) die Linienpaare nur so weit herangezogen werden, als ihre beiden Linien (12) einen Winkel einschließen, der einen vorgegebenen Winkel (α) nicht überschreitet.

3. Verfahren nach Anspruch 1 oder 2, **dadurch gekennzeichnet, dass** zur Berechnung von Mittellinien (10) nur Linienpaare herangezogen werden, deren beiden Linien (12) in einem Abstand verlaufen, der einen vorgegebenen Abstand nicht überschreitet.

4. Verfahren nach einem der vorangehenden Ansprüche, **dadurch gekennzeichnet, dass** zur Berechnung von Mittellinien (10) von durch zwei quer zueinander verlaufenden Linienpaaren begrenzten zu beschriftenden Bereichen jeweils nur das Linienpaar herangezogen wird, dessen beiden Linien (12) den geringeren Abstand aufweisen.

5. Verfahren nach einem der vorangehenden Ansprüche, **dadurch gekennzeichnet, dass** jede der Mittellinien (10) bis maximal zu einem Punkt geführt wird, an dem sie eine einen der Umrisse begrenzende Linie schneidet.

6. Verfahren nach einem der vorangehenden Ansprüche, **dadurch gekennzeichnet, dass** mindestens eine der Mittellinien (10) bis zu einem Schnittpunkt (14) mit einer weiteren der Mittellinien (10) fortgeführt wird, wenn der Schnittpunkt (14) im zu beschriftenden Bereich liegt.
